# EUROPÄISCHE PATENTSCHRIFT

(11) **EP 0 787 085 B1**
(45) Veröffentlichungstag und Bekanntmachung des Hinweises auf die Patenterteilung: **01.09.1999**
(21) Anmeldenummer: 95935372.3
(22) Anmeldetag: 23.09.1995
(51) Int. Cl.: B60T 8/48, B60T 8/24, B60T 13/72

(54) **VERFAHREN ZUM BETREIBEN EINER BLOCKIERGESCHÜTZTEN KRAFTFAHRZEUGBREMSANLAGE**
METHOD OF OPERATING AN ANTI-LOCKING VEHICLE-BRAKE SYSTEM
PROCEDE PERMETTANT DE FAIRE FONCTIONNER UN SYSTEME DE FREINAGE ANTIBLOCAGE POUR VEHICULE

(30) Priorität: 29.10.1994 DE 4438722
(43) Veröffentlichungstag der Anmeldung: 06.08.1997
(73) Patentinhaber: Continental Teves AG & Co. oHG, 60488 Frankfurt (DE)
(72) Erfinder: DRUMM, Stefan, D-55291 Saulheim (DE); VAN MEEL, Franciscus, D-65812 Bad Soden (DE)
(86) Internationale Anmeldenummer: EP9503779
(87) Internationale Veröffentlichungsnummer: WO9613417

(56) Entgegenhaltungen:
- EP-A- 0 478 396
- EP-A- 0 581 105
- DE-A- 4 004 249
- DE-A- 4 238 333
- DE-C- 4 208 496
- DE-C- 4 329 140
- FR-A- 2 623 458
- FR-A- 2 645 096

## Beschreibung

Die Erfindung betrifft ein Verfahren zum Betreiben einer blockiergeschützten Kraftfahrzeugbremsanlage zur Fahrstabilitäts- und/oder Antriebsschlupfregelung.

Aus der EP 0 581 105 A1 ist eine Bremsanlage mit einem Unterdruckbremskraftverstärker bekannt, der zur Realisierung einer Antriebsschlupfregelung mit einem unabhängig vom Fahrerwillen ansteuerbaren pneumatischen 3/2-Wegeventil zusammenwirkt, das zur Bildung einer pneumatischen Druckdifferenz eine Belüftung der Arbeitskammer des Unterdruckbremskraftverstärkers ermöglicht. Außerdem sieht die bekannte Bremsanlage ein Antiblockierregelsystem (ABS) vor, das bei einer Bremsung für stabiles Verzögerungsverhalten des Fahrzeuges sorgt. Der erwähnten Druckschrift sind jedoch keine konkreten Hinweise zu entnehmen, welche Ansteuerlogik für den unabhängig von einer durch den Fahrer ein-geleiteten Pedalbetätigung ansteuerbaren Unterdruckkraftverstärker dem Regelkonzept für radindividuelle, automatisch gesteuerte Aktivbremsvorgänge, beispielsweise zum Zweck einer Fahrstabilitätsregelung, zugrundeliegt. Außerdem sind bei der darin beschriebenen Bremsanlage der verhältnismäßige hohe Verbrauch von Unterdruckvolumen während der Antriebsschlupfregelung bzw. die nicht sichergestellte Unterdruckverfügbarkeit als nachteilig anzusehen.

EP 0 581 105 A1 beschreibt ein Verfahren zum Betreiben einer blockiergeschützten Kraftfahrzeugbremsanlage zur Antriebsschlupfregelung, die einen unabhängig vom Fahrerwillen betätigbaren pneumatischen Unterdruckbremskraftverstärker mit bremspedalbetätigtem Steuerventil sowie einen dem Unterdruckbremskraftverstärker nachgeschalteten Hauptbremszylinder aufweist, an dessen Druckräume über ein Rückförderpumpen sowie Niederdruckspeicher aufweisendes ABS-Hydroaggregat den einzelnen Fahrzeugrädern zugeordnete Radbremsen angeschlossen sind, wobei beim Eintritt in die Antriebsschlupfregelung der Unterdruckbremskraftverstärker unabhängig vom Fahrerwillen voll ausgesteuert wird, und die gewünschten Radbremsdrücke mit Hilfe des ABS-Hydroaggregates eingestellt werden.

Es ist daher Aufgabe der vorliegenden Erfindung, ein Verfahren zum Betreiben einer blockiergeschützten Kraftfahrzeugbremsanlage zur Fahrstabilitäts- und/oder Antriebsschlupfregelung vorzuschlagen, das ein Minimieren des Verbrauchs von Unterdruckvolumen während der Fahrstabilitäts-und/oder Antriebsschlupfregelung ermöglicht.

Diese Aufgabe wird erfindungsgemäß durch die im Patentanspruch 1 aufgeführten Merkmale gelöst. Dadurch wird erreicht, daß der nach dem Ausschalten der Fahrstabilitäts und/oder Antriebsschlupfregelung erfolgende Druckausgleich zwischen der Arbeits- und der Unterdruckkammer des Bremskraftverstärkers nur einen kleinen Verlust am Unterdruckvolumen bzw. Stellenergie bedeutet.

Der Betrieb der beschriebenen Bremsanlage bei gleichzeitigem Vorliegen einer Betätigung durch den Fahrer und einer vom Fahrerwillen unabhängigen Ansteuerung des Unterdruckbremskraftverstärkers wird vorteilhaft dadurch ermöglicht, daß die Betätigung des Bremskraftverstärkers durch den Fahrer sensiert und die Fremdansteuerung entsprechend verändert wird. Durch diese Maßnahme wird erreicht, daß die Übertragung von Fahrer- und Fremdbremsung eine Softwaremaßnahme und daher entsprechend den Bedürfnissen der Fahrzeugregelung frei gestaltbar ist.

Durch die Verwendung des Unterdruckbremskraftverstärkers als alleinige Energiequelle zum Druckaufbau wird in der beschriebenen Bremsanlage der Hydraulikaufwand auf den einer Standard-ABS-Bremsanlage beschränkt.

Eine indirkte Erkennung des Fahrerverzögerungswunsches wird bei einer vorteilhaften Weiterbildung des Erfindungsverfahrens dadurch gewährleistet, daß der Betätigungsweg eines den Unterdruckbremskraftverstärker betätigenden Bremspedals ermittelt wird, wobei das Bremspedal bei einer vom Fahrerwillen unabhängigen Ansteuerung des Unterdruckbremskraftverstärkers nicht mitbewegt wird. Der ermittelte Betätigungsweg wird dabei vorzugsweise mittels einer vorbestimmten oder während Normalbremsungen erlernten Kennlinie in eine Betätigungskraft oder einen Fahrzeugverzögerungs-Sollwert umgerechnet. Durch diese Maßnahmen wird eine Verwendung kostengünstiger Sensorik ermöglicht.

Eine genaue Ermittlung des Fahrerverzögerungswunsches wird nach einem weiteren vorteilhaften Merkmal dadurch ermöglicht, daß die mit dem Bremspedal eingeleitete Betätigungskraft sensiert wird.

Um während der Regelung eine Bereitstellung eines zusätzlichen Unterdrucks zu gewährleisten, sieht eine vorteilhafte Weiterbildung des Erfindungsverfahrens vor, daß bei einem zu niedrigen Wert des in der Unterdruckkammer des Unterdruckbremskraftverstärkers herrschenden Unterdrucks eine Drosselung des Fahrzeugmotors vorgenommen wird.

Der Motoreingriff erfolgt dabei vorzugsweise mittels des sogenannten E-Gases.

Um ein Maß für den verfügbaren Unterdruck zu gewinnen, wird schließlich nach einem weiteren vorteilhaften Verfahrensmerkmal vorgesehen, daß der im Hauptbremszylinder eingesteuerte hydraulische Druck fortlaufend ermittelt wird. Durch diese Maßnahme wird eine zuverlässige Überwachung der Aussteuerung des Unterdruckbremskraftverstärkers ermöglicht.

Um dabei eine redundante Information über die Druckwerte zu erhalten, wird in einer vorteilhaften Weiterbildung die Druckermittlung mittels Drucksensoren durchgeführt, die an die Druckräume des Hauptzylinders angeschlossen sind.

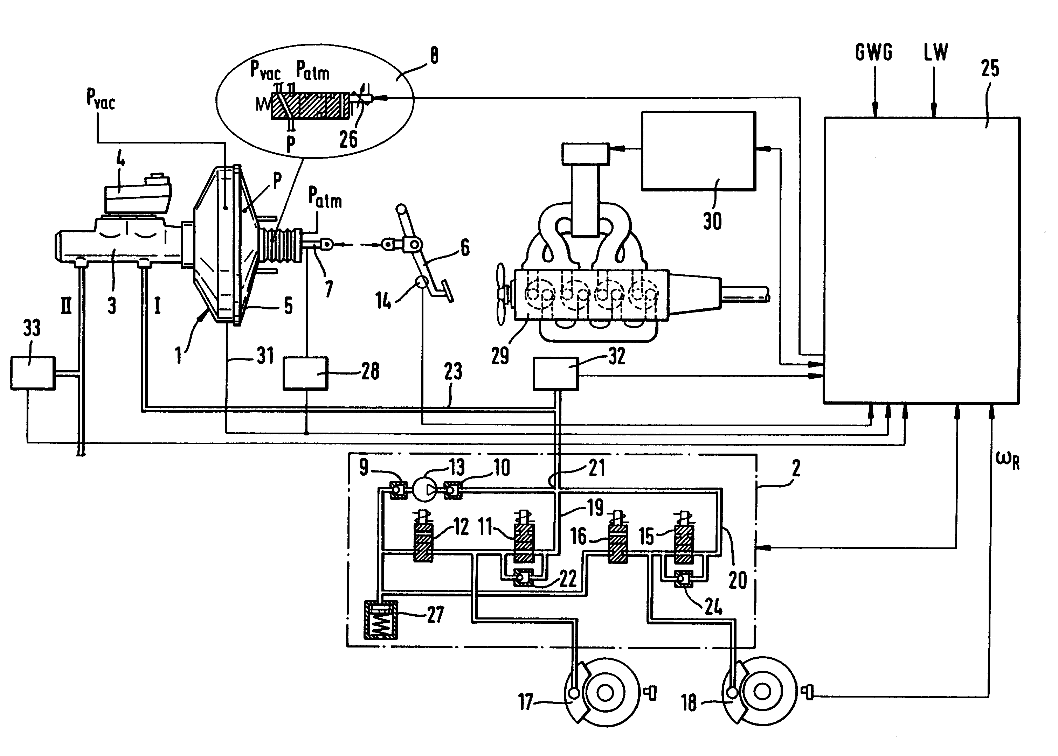

Die Erfindung wird im nachfolgenden Text an einem Ausführungsbeispiel im Zusammenhang mit der beiliegenden Zeichnung näher erläutert.

In der Zeichnung zeigt die einzige Figur eine Ausführung einer blockiergeschützten Kraftfahrzeugbremsanlage, mit der das erfindungsgemäße Verfahren realisiert werden kann.

Die in der Zeichnung dargestellte Bremsanlage zur Durchführung des erfindungsgemäßen Verfahrens weist zwei Bremskreise I und II auf, deren Aufbau völlig identisch ist, so daß die folgende Beschreibung eines Bremskreises ebenso auf den anderen zutrifft. Die gezeigte Bremsanlage besteht im wesentlichen aus einem Bremsdruckgeber 1, an den über nicht näher bezeichnete hydraulische Leitungen Radbremszylinder 17,18 anschließbar sind, einem zwischen dem Bremsdruckgeber 1 und den Radbremsen geschalteten ABS-Hydroaggregat 2, sowie einem elektronischen Regler 25 mit zugehöriger Sensorik. Die Zuordnung der Radbremszylinder 17,18 der einzelnen Bremskreise I, II ist derart getroffen, daß der erste Radbremszylinder 17 entweder einem Rad einer Fahrzeugachse und der andere Radbremszylinder 18 dem diagonal gegenüberliegenden Rad der anderen Fahrzeugachse zugeordnet ist (diagonale Aufteilung der Bremskreise) oder aber beide Radbremszylinder 17 und 18 derselben Fahrzeugachse zugeordnet sind (Schwarzweiß-Aufteilung der Bremskreise).

Der vom Fahrer des Kraftfahrzeuges mittels eines Bremspedals 6 betätigbare Druckgeber 1 besteht aus einem pneumatischen Bremskraftverstärker 5, dem ein Hauptbremszylinder, vorzugsweise ein Tandemhauptzylinder 3 nachgeschaltet ist, dessen nicht gezeigte Druckräume mit einem Druckmittelvorratsbehälter 4 verbindbar sind. An das Bremspedal 6 ist eine Betätigungsstange 7 angekoppelt, die eine Betätigung eines lediglich schematisch angedeuteten Steuerventils 8 durch den Fahrzeugfahrer ermöglicht, das den Aufbau eines pneumatischen Differenzdruckes im Gehäuse des Bremskraftverstärkers 5 steuert. Ein lediglich schematisch dargestellter, durch Steuersignale des elektronischen Reglers 25 ansteuerbarer Elektromagnet 26 ermöglicht dabei eine Fremdbetätigung des Steuerventils 8 auch in Überlagerung zu einer am Bremspedal 6 eingeleiteten Betätigungskraft.

Ein mit dem Bremspedal 6 in Wirkverbindung stehender Bremslichtschalter 14 ermöglicht die Erkennung einer Ansteuerung des Bremskraftverstärkers 5 durch den Fahrer oder durch eine Betätigung des Elektromagneten 26. Bei einer Fremdbetätigung des Bremskraftverstärkers 5 wird das Bremspedal 6 mitgeführt und so der Bremslichtschalter 14 umgesteuert. Eine durch den Fahrer eingeleitete Betätigung des Bremskraftverstärkers 5 kann z. B. durch den Einsatz eines nicht gezeigten Löseschalters erkannt werden.

Das ABS-Hydroaggregat 2 weist ein Motor-Pumpen-Aggregat auf, das aus einer durch einen nicht gezeigten Elektromotor angetriebenen hydraulischen Rückförderpumpe 13 besteht, deren Saugseite über ein erstes Rückschlagventil 9 an einen den Radbremsen 17,18, zugeordneten Niederdruckspeicher 27 angeschlossen ist. Von der Druckseite der Rückförderpumpe 13 strömt das Druckmittel über ein zweites Rückschlagventil 10 und eine nicht gezeigte Dämpfungskammer zu einem hydraulischen Knotenpunkt 21. An diesen angeschlossen ist sowohl ein zum ersten Radbremszylinder 17 führender Leitungsabschnitt 19 als auch ein zum zweiten Radbremszylinder 18 führender Leitungsabschnitt 20. Eine hydraulische Leitung 23 verbindet die Druckseite der Rückförderpumpe 13 mit dem Tandemhauptzylinder 3. Zur Modulation des im ersten Radbremszylinder 17 eingesteuerten Drucks dienen eine Parallelschaltung eines Einlaß- (11) mit einem dritten Rückschlagventil 22 sowie ein Auslaßventil 12, wobei- die erwähnte Parallelschaltung im Leitungsabschnitt 19 eingefügt ist und das Auslaßventil 12 zum Zwecke eines Radbremsdruckabbaus eine Verbindung zwischen dem ersten Radbremszylinder 17 und dem Niederdruckspeicher 27 ermöglicht. Um in dem zum betrachteten Bremskreis gehörenden zweiten Radbremszylinder 18 analog zum bereits betrachteten Radbremszylinder 17 den darin eingesteuerten hydraulischen Druck regulieren zu können, sind eine zweite Parallelschaltung eines zweiten Einlaß- (15) mit einem vierten Rückschlagventil 24 sowie ein zweites Auslaßventil 16 vorgesehen, wobei die erwähnte Parallelschaltung im Leitungsabschnitt 20 eingefügt ist und das Auslaßventil 16 zum Zwecke eines Radbremsdruckabbaus eine Verbindung zwischen dem zweiten Radbremszylinder 18 und dem Niederdruckspeicher 27 herstellt. Der Sensierung einer am Bremspedal 6 durch den Fahrer eingeleiteten Betätigungskraft dient ein vorzugsweise mit der am Bremspedal 6 angelenkten Kolbenstange 7 zusammenwirkender Kraftsensor 28, dessen Signale dem Regler 25 zugeführt werden.

Um schließlich vom Fahrer im Tandemhauptbremszylinder 3 eingeleitete Druckänderungen zu erkennen sind Mittel zur Erfassung der Hauptbremszylinderdrücke vorgesehen, die vorzugsweise durch an den ersten und den zweiten Bremskreis I,II angeschlossene Drucksensoren 32, 33 gebildet sind, deren Ausgangssignale zusammen mit weiteren Signalen, die z.B. Informationen über den Lenkwinkel (LW), die Raddrehzahlen (ω_{R}), sowie die Fahrzeugreaktion, wie z.B. die Gierwinkelgeschwindigkeit (GWG) oder die Querbeschleunigung (α_{Q}) darstellen, dem elektronischen Regler 25 zugeführt werden.

Außerdem erhält der elektronische Regler 25 über die Signalleitung 31 Informationen über den Zustand des Bremskraftverstärkers 5, z. B. den Weg seiner beweglichen Wand.

Bei einer Normalbremsung kann in den Radbremszylindern 17,18 sowohl ein Druckauf- als auch ein Druckabbau durch entsprechende Betätigung des Bremsdruckgebers 1 über die offenen Einlaßventile 11,15 erfolgen.

Bei einer ABS-Regelbremsung, bei der beispielsweise das der Radbremse 17 zugeordnete Rad zu blockieren droht, wird die Rückförderpumpe 13 gestartet. Die Druckmodulation erfolgt durch entsprechendes Schalten des Ein- und des Auslaßventils 11 und 12, wobei das in den Niederdruckspeicher 27 abgelassene Druckmittel mit der Rückförderpumpe 13 auf das Hauptbremszylinder-Druckniveau zurückgefördert wird.

Beim Eintritt in jeden Fremdbremsvorgang wird der Bremskraftverstärker 5 unabhängig vom Fahrerwillen mittels Elektromagneten 26 voll ausgesteuert.

Mit den ABS-Ventilen 11,12,15,16 werden die benötigten radindividuellen Bremsdruckwerte eingeregelt. Nicht benötigtes Druckmittel wird von der Rückförderpumpe 13 in den Hauptbremszylinder 3 zurückgefördert, wobei kein Unterdruck verbraucht wird. Während der Fremdbremsung wird ein möglicher Fahrerbremswunsch durch Erfassung der Pedalbetätigung (Kraft und/oder Weg) und entsprechend veränderte Fremdbremsdrücke berücksichtigt. Wenn sowohl Fahrer- als auch Fremdbremsung beendet und alle Bremsdrücke auf Null eingeregelt sind, hat die Rückförderpumpe 13 das Unterdruckvolumen des Bremskraftverstärkers 5 wieder auf den Wert gebracht, den es zu Beginn der Regelung hatte. Unterdruckvolumen wird erst dann verbraucht, wenn die Fremdbetätigung des Bremskraftverstärkers 5 ausgeschaltet wird, und seine für die Fremdbremsung mit Atmosphärendruck belüftete Arbeitskammer mit der Unterdruckkammer verbunden wird, um den Bremskraftverstärker in die Lösestellung zu bringen.

Dabei ist es besonders sinnvoll, wenn die Arbeitskammer des Bremskraftverstärkers 5 in der Lösestellung ein möglichst geringes Volumen aufweist. Dadurch wird erreicht, daß der nach dem Ausschalten der Fremdansteuerung des Bremskraftverstärkers 5 erfolgte Druckausgleich zwischen Arbeits- und Unterdruckkammer nur einen kleinen Verlust an Unterdruck bedeutet, so daß noch genügend Unterdruck für eine weitere Fremdbremsung oder eine Fahrerbremsung zur Verfügung steht. Beginnt eine Fremdbremsung mit einem ungenügend ausgebildeten Unterdruckniveau in der Unterdruckkammer des Bremskraftverstärkers 5, so muß der elektromagnetische Regler 25, zusammenwirkend mit einem Motorregler 30, eine Drosselung des Fahrzeugmotors 29, beispielsweise per E-Gas-Eingriff, vornehmen. Die Möglichkeit eines Eingriffs in das Antriebsmanagement muß gegeben sein, damit die Regelung bei Bedarf einen mit der vorliegenden Fahrsituation unvereinbaren Fahrerbeschleunigungswunsch korrigieren kann.

### Bezugszeichenliste

- 1: Bremsdruckgeber
- 2: ABS-Hydroaggregat
- 3: Hauptbremszylinder
- 4: Druckmittelvorratsbehälter
- 5: Bremskraftverstärker
- 6: Bremspedal
- 7: Betätigungsstange
- 8: Steuerventil
- 9: Rückschlagventil
- 10: Rückschlagventil
- 11: Einlaßventil
- 12: Auslaßventil
- 13: Rückförderpumpe
- 14: Bremslichtschalter
- 15: Einlaßventil
- 16: Auslaßventil
- 17: Radbremszylinder
- 18: Radbremszylinder
- 19: Leitungsabschnitt
- 20: Leitungsabschnitt
- 21: Knotenpunkt
- 22: Rückschlagventil
- 23: Leitung
- 24: Rückschlagventil
- 25: Regler
- 26: Elektromagnet
- 27: Niederdruckspeicher
- 28: Kraftsensor
- 29: Fahrzeugmotor
- 30: Motorregelschaltung
- 31: Signalleitung
- 32: Drucksensor
- 33: Drucksensor

## Patentansprüche

1. Verfahren zum Betreiben einer blockiergeschützten Kraftfahrzeugbremsanlage zur Fahrstabilitäts- und/oder Antriebsschlupfregelung, die einen unabhängig vom Fahrerwillen betätigbaren pneumatischen Unterdruckbremskraftverstärker (5) mit bremspedalbetätigtem Steuerventil (8) sowie einen dem Unterdruckbremskraftverstärker (5) nachgeschalteten Hauptbremszylinder (3) aufweist, an dessen Druckräume über ein Rückförderpumpen (13) sowie Niederdruckspeicher (27) aufweisendes ABS-Hydroaggregat (2) den einzelnen Fahrzeugrädern zugeordnete Radbremsen (17,18) angeschlossen sind, wobei beim Eintritt in die Fahrstabilitäts- und/oder Antriebsschlupfregelung der Unterdruckbremskraftverstärker (5) unabhängig vom Fahrerwillen voll ausgesteuert wird, und die gewünschten Radbremsdrücke mit Hilfe des ABS-Hydroaggregats (2) eingestellt werden, während nach Beendigung der Fahrstabilitäts- und/oder Antriebsschlupfregelung die vom Fahrerwillen unabhängige Betätigung des Unterdruckbremskraftverstärkers (5) erst dann ausgeschaltet wird, wenn das aus den Radbremsen (17,18) in die Niederdruckspeicher (27) abgelassene Druckmittel durch Rückfördern zurück in den Hauptbremszylinder (3) gebracht wurde.

2. Verfahren nach Anspruch 1, dadurch **gekennzeichnet**, daß die Betätigung des Steuerventils (8) des Unterdruckbremskraftverstärkers (5) durch den Fahrer sensiert wird.

3. Verfahren nach Anspruch 2, dadurch **gekennzeichent**, daß der Betätigungsweg eines den Unterdruckbremskraftverstärker (5) betätigenden Bremspedals (6) ermittelt wird, wobei das Bremspedal (6) bei einer vom Fahrerwillen unabhängigen Betätigung des Unterdruckbremskraftverstärkers (5) nicht mitbewegt wird.

4. Verfahren nach Anspruch 3, dadurch **gekennzeichnet**, daß der ermittelte Betätigungsweg mittels einer vorbestimmten oder während Normalbremsungen erlernten Kennlinie in eine Betätigungskraft oder einen Fahrzeugverzögerungs-Sollwert umgerechnet wird.

5. Verfahren nach Anspruch 2, dadurch **gekennzeichnet**, daß die mit dem Bremspedal (6) eingeleitete Betätigungskraft sensiert wird.

6. Verfahren nach einem der Ansprüche 1 bis 5, dadurch **gekennzeichnet**, daß bei einem zu niedrigen Wert des in der Unterdruckkammer des Unterdruckbremskraftverstärkers (5) herrschenden Unterdrucks eine Drosselung des Fahrzeugmotors (29) vorgenommen wird.

7. Verfahren nach Anspruch 6, dadurch **gekennzeichnet,** daß der im Hauptbremszylinder (3) eingesteuerte hydraulische Druck fortlaufend ermittelt wird.

## Claims

1. Method of operating an anti-lock automotive vehicle brake system for driving stability control and/or traction slip control which includes a pneumatic vacuum brake force booster (5), that is operable irrespective of the driver's wish, with a brake-pedal operated control valve (8) and a master brake cylinder (3) connected downstream of the vacuum brake force booster (5) and having its pressure chambers connected to wheel brakes (17, 18) associated with the individual vehicle wheels by way of an ABS hydraulic unit (2) including return pumps (13) and low-pressure accumulators (27), wherein, upon commencement of driving stability control and/or traction slip control, the vacuum brake force booster (5) has achieved its maximum attainable boosting force irrespective of the driver's wish, and the desired wheel braking pressures are adjusted by way of the ABS hydraulic unit (2), and, at the end of driving stability control and/or traction slip control, the actuation of the vacuum brake force booster (5) irrespective of the driver's wish will be deactivated only after the pressure fluid discharged from the wheel brakes (17, 18) to the low-pressure accumulators (27) has been returned to the master brake cylinder (3).

2. Method as claimed in claim 1,
**characterized** in that the actuation of the control valve (8) of the vacuum brake force booster (5) by the driver is sensed.

3. Method as claimed in claim 2,
**characterized** in that the actuating travel of a brake pedal (6) which actuates the vacuum brake force booster (5) is determined, and the brake pedal (6) is not moved when the vacuum brake force booster (5) is actuated irrespective of the driver's wish.

4. Method as claimed in claim 3,
**characterized** in that the determined actuating travel is converted into an actuating force or a vehicle deceleration nominal value by way of a characteristic curve which is predefined or acquired during normal braking operations.

5. Method as claimed in claim 2,
**characterized** in that the actuating force which is introduced by the brake pedal (6) is sensed.

6. Method as claimed in any one of claims 1 to 5,
**characterized** in that the vehicle engine (29) is throttled when the value of the vacuum prevailing in the vacuum chamber of the vacuum brake force booster (5) is too low.

7. Method as claimed in claim 6,
**characterized** in that the hydraulic pressure introduced into the master brake cylinder (3) is continuously established.

## Revendications

1. Procédé d'exploitation d'un système de freinage automobile à régulation antiblocage des roues, en vue d'une régulation de stabilité de conduite et/ou antipatinage en traction, comportant un amplificateur pneumatique d'effort de freinage (5) à dépression, pouvant être actionné indépendamment de la volonté du conducteur, comprenant une valve de commande (8) actionnée par la pédale de frein, ainsi qu'un maître-cylindre de frein (3) monté en aval de l'amplificateur d'effort de freinage (5) à dépression et dont les chambres de pression sont reliées, par l'intermédiaire d'un groupe hydraulique ABS (2) contenant une pompe de renvoi (13) et des accumulateurs basse pression (27), aux freins de roues (17, 18) associés aux différentes roues du véhicule, où, au début de la régulation de stabilité de conduite et/ou antipatinage en traction, l'amplificateur d'effort de freinage (5) à dépression est actionné à fond, indépendamment de la volonté du conducteur, et les pressions souhaitées dans les freins de roues sont réglées à l'aide du groupe hydraulique ABS (2), alors qu'après l'achèvement de la régulation de stabilité de conduite et/ou antipatinage en traction, l'actionnement de l'amplificateur d'effort de freinage (5) à dépression indépendant de la volonté du conducteur n'est arrêté que lorsque le fluide de pression évacué des freins de roues (17, 18) vers les accumulateurs basse pression (27) a été renvoyé dans le maître-cylindre de frein (3) par la pompe de renvoi.

2. Procédé selon la revendication 1, caractérisé en ce que l'on détecte l'actionnement de la valve de commande (8) de l'amplificateur d'effort de freinage (5) à dépression par le conducteur.

3. Procédé selon la revendication 2, caractérisé en ce que l'on détermine la course d'actionnement d'une pédale de frein (6) actionnant l'amplificateur d'effort de freinage (5) à dépression, la pédale de frein (6) n'étant pas entraînée pendant un actionnement de l'amplificateur d'effort de freinage (5) à dépression indépendant de la volonté du conducteur.

4. Procédé selon la revendication 3, caractérisé en ce que la course d'actionnement mesurée est traduite, au moyen d'une courbe caractéristique prédéterminée ou acquise au cours de freinages normaux, en une force d'actionnement ou une valeur consigne de ralentissement du véhicule.

5. Procédé selon la revendication 2, caractérisé en ce que l'on mesure la force d'actionnement appliquée à travers la pédale de frein (6).

6. Procédé selon l'une des revendications 1 à 5, caractérisé en ce que, lorsque la valeur de dépression régnant dans la chambre à vide de l'amplificateur d'effort de freinage (5) à dépression est trop faible, on procède à un étranglement du moteur (29) du véhicule.

7. Procédé selon la revendication 6, caractérisé en ce que la pression hydraulique induite dans le maître-cylindre de frein (3) est déterminée en continu.
